# EUROPÄISCHE PATENTSCHRIFT

(11) **EP 1 896 362 B1**
(45) Veröffentlichungstag und Bekanntmachung des Hinweises auf die Patenterteilung: **08.10.2008**
(21) Anmeldenummer: 06742370.7
(22) Anmeldetag: 23.05.2006
(51) Int. Cl.: C01B 33/03, B01J 12/00

(54) **VERFAHREN ZUR HERSTELLUNG VON SILICIUM AUS HALOGENSILANEN**
METHOD FOR PRODUCTION OF SILICON FROM SILYL HALIDES
PROCEDE POUR PRODUIRE DU SILICIUM A PARTIR DE SILANES HALOGENES

(30) Priorität: 25.05.2005 DE 102005024041
(43) Veröffentlichungstag der Anmeldung: 12.03.2008
(73) Patentinhaber: REV Renewable Energy Ventures AG, 9497 Triesenberg (LI)
(72) Erfinder: AUNER, Norbert, 60439 Frankfurt am Main (DE)
(74) Vertreter: Dabringhaus, Walter
(86) Internationale Anmeldenummer: PCT/DE2006/000891
(87) Internationale Veröffentlichungsnummer: WO 2006/125425

(56) Entgegenhaltungen:
- US-A- 4 374 182
- US-A- 4 377 564
- PATENT ABSTRACTS OF JAPAN Bd. 009, Nr. 228 (C-303), 13. September 1985 (1985-09-13) & JP 60 086274 A (SUWA SEIKOSHA KK), 15. Mai 1985 (1985-05-15)

## Beschreibung

Die vorliegende Erfindung betrifft ein Verfahren zur Herstellung von Silicium aus Halogensilanen.

Im Stand der Technik sind verschiedene Verfahren zur Herstellung von Silicium hoher Reinheit bekannt. In einem industriell etablierten Prozess wird Trichlorsilan HSiCl₃ verwendet, das in Anwesenheit von Wasserstoff thermisch an einem heißen Substrat zersetzt wird. Die Zersetzungstemperaturen liegen im beispielsweise in der Patentschrift DE 1061593 beschriebenen, als "Siemens-Prozess" bekannten Verfahren im Bereich von 800-1300 °C. Ein entscheidender Nachteil dieser Vorgehensweise ist die geringe Konversionsrate des eingesetzten Trichlorsilans, die ein Arbeiten mit großen Wasserstoffüberschüssen von der 3,5fachen bis 16fachen Menge im Vergleich zum stöchiometrischen Einsatz nötig macht, um eine Umsetzung von 20-40 % des Trichlorsilans zu Silicium zu erreichen. Ein weiterer Nachteil ist, dass Trichlorsilan kostenintensiv aus metallurgischem Silicium geringer Reinheit und Chlorwasserstoff HCl (K. Hata, S. Nakamura, S. Yasuda, Japan. Tohoku Daigaku Senko Seiren Kenkyusho Iho 23(1) (1967) 45-54; GB 883326) oder aus Tetrachlorsilan SiCl₄ und Wasserstoff (US 4836997; US 3933985: US 4309259) hergestellt werden muss. Letzteres Verfahren erreicht nur eine geringe Ausbeute. Zusätzlich wird das in den Prozess eingeführte Trichlorsilan während der Abscheidung von Silicium zu einem großen Teil in SiCl₄ umgewandelt, wodurch ein einfaches Wiedereinschleusen des Chlorsilans unmöglich wird.

In einer beispielsweise in der DE 1061593 offenbarten Variante dieses Prozesses wird das billigere Tetrachlorsilan als Siliciumquelle verwendet, wobei allerdings noch geringere Ausbeuten an Silicium bei noch größerem Wasserstoffüberschuss erhalten werden.

Die Abscheidungen von festem Silicium aus Halogensilanen bei hohen Temperaturen haben den gemeinsamen Nachteil, das gerade diese hohen Temperaturen eine Rückreaktion des abgeschiedenen Siliciums mit während der Abscheidung ebenfalls gebildetem HCl zu Halogensilanen begünstigen. Ein in der US 3625846 offengelegtes Verfahren begegnet diesem Umstand durch intensive Kühlung der Produktgase.

Eine Ausgangsverbindung, bei der sich während der Abscheidung von Silicium kein Gleichgewicht mit Nebenprodukten einstellen kann, ist Monosilan SiH₄. Dieses muss jedoch kostenintensiv erzeugt werden, beispielsweise aus Trichlorsilan (DE 2507864).

Nach einem neueren Verfahren, das in der DE 1982587 Cl beschrieben ist, werden Chlorsilane mittels stöchiometrischer Mengen Alkalimetall in Salzschmelzen mit Wasserstoff zu Monosilan hydriert.

Die nötigen hohen Aktivierungsenergien für die Reaktion von Chlorsilanen mit Wasserstoff werden im Stand der Technik weiterhin durch Einsatz von Plasmen zur Verfügung gestellt. So wird beispielsweise in der GB 892014 ein kapazitiv gekoppeltes Plasma zur Zersetzung von SiCl₄/H₂-Gemischen genutzt, um Silicium auf heißen Oberflächen (mehrere hundert °C) abzuscheiden. Chlorsilan/Wasserstoff-Gemische werden auch in den US 4102985 und US 4102764 unter Verwendung einer elektrischen Bogenentladung bei Normaldruck zu geschmolzenem Silicium umgesetzt.

Auch induktiv gekoppelte Plasmen werden im Stand der Technik beschrieben, beispielsweise wird in der US 2004/0250764 A1 die Anregung eines SiF₄/H₂/Ar-Gasgemisches zu einer Gasentladung mittels einer Induktionsspule beschrieben. Das entstehende Silicium setzt sich auf Siliciumpartikeln ab, die durch die Plasmazone geführt werden.

Ein in der GB 851290 beschriebenes Verfahren scheidet elementares Silicium durch Einwirkung von atomarem Wasserstoff auf SiCl₄ nach Art einer Remote-Plasmaquelle ab. Dazu wird der atomare Wasserstoff bei einem Druck von 1 Torr durch eine elektrische Entladung (50 Hz - 100 MHz) erzeugt und das Halogensilan nachfolgend zugedüst.

In der GB 823383 werden durch Einwirkung eines elektrischen Lichtbogens zwischen Elektroden Si-Tropfen auf den Elektroden abgeschieden. Die Elektroden werden in dem Maße langsam auseinander gezogen, in dem das Silicium aufwächst. Weiterhin wird Mikrowellenstrahlung zur Plasmaerzeugung bei der Herstellung von Si beschrieben, wobei in der US 2945797 sehr energiereiche Mikrowellenpulse von 1 MW Leistung benutzt werden, um eine Einkopplung der Strahlung zu erreichen. Auch wird dort eine Kontamination der Reaktorwandung mit Silicium erwähnt, der durch intensive Kühlung begegnet werden soll.

Die Abscheidung von kristallinem Silicium unter vermindertem Druck durch eine Mikrowellenentladung bei niedriger Leistung in H₂, das mit 5% SiCl₄ versetzt ist, wird in der Literatur beschrieben (P. M. Jeffers, S. H. Bauer, J. Non-Cryst. Solids 57 (1983) 189-193). Die US 4908330 offenbart die Herstellung dünner Filme aus Silicium bei weniger als 1 Torr Druck durch Reduktion von SiF₄/Si₂F₆ mit atomarem Wasserstoff, der durch eine Mikrowellenentladung in einer separaten Plasmakammer (Remote-Plasma) erzeugt wird.

In den US 4786477, US 4416913 und US 5374413 wird ebenfalls Mikrowellenstrahlung eingesetzt, um eine Si-Abscheidung zu erreichen. In diesen Verfahren wird allerdings die rein thermische Wirkung der Strahlung auf glühendes Silicium genutzt, um Si-Partikel auf hohe Temperatur zu erhitzen, ohne dass eine Plasmabildung erfolgt.

Eine weitere Form von Silicium, das durch Plasmaentladungen abgeschieden werden kann, ist das sogenannte amorphe Silicium, welches meist noch gewisse Mengen anderer Elemente (H, Cl, F etc.) enthält. Aus der Literatur bekannt ist ein Verfahren, bei dem ein amorphes Silicium durch eine elektrische Glimmentladung in einem Gasgemisch SiCl₄/H₂/He unter Normaldruck abgeschieden wird, das neben H noch etwa 1% Cl enthält (O. H. Giraldo, W. S. Willis, M. Márquez, S. L. Suib, Y. Hayashi, H. Matsumoto, Chem. Mater. 10 (1998) 366-371).

Mit steigendem Gehalt an Halogen und Wasserstoff im erzeugten Silicium wird schließlich der Übergang zu Polysilanen/Polysilylenen vollzogen, in denen im Mittel nur noch zwei der vier möglichen Valenzen durch Bindungen an weitere Si-Atome abgesättigt sind. Gezielt hergestellt werden chlorierte Polysilane beispielsweise wie in der JP 62143814 beschrie-ben durch Umsetzung von elementarem Si mit Chlor in inerten organischen Lösungsmitteln oder wie in der JP 59195519 of-fengelegt durch Reaktion von Siliciden mit Chlor. Die US 4374182, EP 0282037 A2, JP 1197309 und JP 1192716 offen-baren die Bildung von Silicium aus chlorierten Polysilanen SiₙCl₂ₙ₊₂ durch Disproportionierung oder Reduktion mit H₂ bei erhöhter Temperatur.

Silicium hoher Reinheit wird im Stand der Technik auch durch Transportreaktionen unter Nutzung von Subhalogeniden aus weniger reinem Si erhalten. Ein literaturbekannter Prozess setzt SiI₄ mit Si bei hohen Temperaturen zu SiI₂ um, welches bei niedrigeren Temperaturen wieder unter Disproportionierung zerfällt (T. F. Ciszek, T. H. Wang, M. R. Page, R. E. Bauer, M. D. Landry, Conference Record of the IEEE Photovoltaik Specialists Conference (2002), 29th 206-209). Auch andere Subhalogenide können für die Transportreaktion herangezogen werden, so wird beispielsweise in der GB 754554 besonders die Verwendung von SiCl₂ und in den US 4070444 und US 4138509 die Verwendung von SiF₂ beschrieben.

Ein ökonomischer Vorteil innerhalb eines Verfahrens zur Herstellung von Silicium hoher Reinheit ergibt sich.aus der Verwendung preiswerter, leicht zugänglicher Ausgangsverbindungen. Bevorzugte Edukte sollten also die Tetrahalogensilane SiX₄ sein, von denen sich insbesondere SiF₄ und SiCl₄ kostengünstig erzeugen lassen. Beispielsweise beschreibt die US 4382071 ein Verfahren zur Darstellung von SiF₄ aus HF und SiO₂ enthaltendem Material. SiCl₄ lässt sich durch Carbochlorierung von Siliciumoxid-haltigem Material nach

SiO₂ + 2 Cl₂ + 2 C → SiCl₄ + 2 CO

erzeugen (Beispiele: EP 0167156 B1, JP 60112610, EP 0302604 B1) und fällt bei verschiedenen technischen Prozessen als Nebenprodukt an, beispielsweise bei der Herstellung von HSiCl₃ aus Silicium und HCl oder innerhalb des Siemens-Prozesses. Ein weiterer Vorteil von insbesondere SiCl₄ ist, dass es mit der für den Siemens-Prozess zur industriellen Reife entwickelten Aufreinigungstechnik ebenso wie das heute verarbeitete HSiCl₃ in hoher Reinheit erhältlich ist.

Weiterhin sind möglichst hohe Umsatzraten der siliciumhaltigen Ausgangsverbindung zu elementarem Silicium oder zumindest ein einfaches Wiederverwerten erwünscht. Falls der Einsatz von Wasserstoff als Reduktionsmittel unumgänglich ist, sollte die Wasserstoffzuspeisung möglichst nicht wesentlich über dem stöchiometrisch Notwendigen liegen, um einerseits infolge vergleichsweise kleiner Gasvolumina pro erzeugtem Silicium kompakte Apparaturen zu ermöglichen und andererseits vergleichsweise wenig Wasserstoff für die Wiederverwertung reinigen zu müssen.

Verfahren mit Temperaturen über 1000°C zur Darstellung des Siliciums sollten vermieden werden, um einerseits die thermische Beanspruchung der Apparaturen niedrig zu halten und andererseits die Gefahr der Kontamination des dargestellten Siliciums durch in den Reaktorwänden enthaltene Verunreinigungen zu minimieren.

Der vorliegenden Erfindung liegt die Aufgabe zugrunde, ein Verfahren zur Herstellung von Silicium hoher Reinheit zur Verfügung zu stellen, welches sich durch eine hohe Umsatzrate der siliciumhaltigen Ausgangsverbindung, einen niedrigen Energiebedarf und die Verwendung kostengünstiger Ausgangsverbindungen auszeichnet.

Diese Aufgabe wird erfindungsgemäß bei einem Verfahren der angegebenen Art durch die kennzeichnenden Merkmale von Patentanspruch 1 gelöst.

Als Halogensilan im Sinne des erfindungsgemäßen Verfahrens werden insbesondere Verbindungen des Typs

HₙSiX₄₋ₙ (X = F, Cl, Br, I; n = 0 - 3)

sowie deren Gemische bezeichnet.

Ein halogeniertes Polysilan im Sinne des erfindungsgemäßen Verfahrens ist insbesondere eine reine Verbindung oder ein Gemisch von Verbindungen mit jeweils mindestens einer direkten Bindung Si-Si, deren Substituenten ausschließlich aus Halogen oder aus Halogen und Wasserstoff bestehen und in deren Zusammensetzung das Atomverhältnis Substituenten : Silicium mindestens 1 : 1 beträgt. Im Unterschied zum Stand der Technik ist das im erfindungsgemäßen Verfahren zur Herstellung von Silicium geeignete halogenierte Polysilan nicht auf Verbindungen mit reiner Halogensubstitution und Atomverhältnissen Substituenten : Silicium nahe 2 beschränkt.

Das erfindungsgemäße Verfahren ist dadurch gekennzeichnet, dass zur Herstellung des halogenierten Polysilans aus Halogensilan ein Plasmaprozess verwendet wird. Dabei zeichnet sich die Zone, in der die Reaktion zum Polysilan erfolgt, durch vergleichsweise niedrige Gastemperaturen sowie durch ebenfalls vergleichsweise niedrige Wandtemperaturen des Reaktors aus. Dadurch wird eine Abscheidung von elementarem Silicium in der Reaktionszone sowie an den Reaktorwänden vermieden.

Als "Plasma" im Sinne des erfindungsgemäßen Verfahrens wird ein Gas oder ein Gasgemisch bezeichnet, das sich durch einen variablen Anteil von nicht-neutralen Gasteilchen auszeichnet, der gegenüber dem durch die natürlichen Umgebungsbedingungen entstehenden erhöht ist.

Als "Plasmaentladung" im Sinne des erinfdungsgemäßen Verfahrens wird die Erzeugung eines Plasmas durch Beaufschlagen eines Gases oder Gasgemisches mit geeigneten Energieformen bezeichnet. Die Plasmaentladung ist, abhängig von den Bedingungen der Plasmaerzeugung, nicht zwingend von optischen Effekten, wie einem sichtbaren Leuchten, begleitet.

Das im ersten Schritt des erfindungsgemäßen Verfahrens gebildete halogenierte Polysilan fällt als Flüssigkeit, teils auch mit hoher Viskosität und/oder als wachsartiger, wenig kompakter farbloser bis gelbbrauner Feststoff an und lässt sich durch geeigneten apparativen Aufbau leicht von den Reaktorwänden und aus dem Reaktionsraum entfernen.

Das erfindungsgemäße Verfahren zur Herstellung von halogeniertem Polysilan lässt sich grundsätzlich mittels zweier verschiedener Ausführungsformen der Plasmareaktion verwirklichen:
A. Die Plasmaerzeugung findet in Halogensilan enthaltendem Gas statt. Dabei kann Halogensilan in einer Mischung mit Wasserstoff, Halogenwasserstoff und/oder inerten Gasen sowie die Plasmaentladung begünstigenden Zumischungen vorliegen.
   Halogensilan kann auch unverdünnt eingesetzt werden.
B. Halogensilan und/oder Wasserstoff wird einem Gasstrom (der bereits Halogensilan enthalten kann) zugemischt, nachdem dieser eine Plasmazone durchquert hat (Remote-Plasma).
   Der die Plasmazone durchquerende Gasstrom kann dabei Wasserstoff oder Halogensilan und/oder inerte Gase, Halogenwasserstoff sowie die Plasmaentladung begünstigende Zumischungen enthalten.

In beiden Ausführungsformen des erfindungsgemäßen Verfahrens kann die Plasmaerzeugung durch geeignete Maßnahmen zusätzlich unterstützt werden. Nicht einschränkende Beispiele für solche unterstützenden Maßnahmen sind etwa die Injektion von Elektronen aus einer Glühkathode oder einer Elektronenkanone oder die Erzeugung freier Ladungsträger durch Anlegen einer Hochspannung oder der Einsatz ionisierender Strahlung.

In einer Variante der Ausführungsform A des erfindungsgemäßen Verfahrens wird in einer Mischung aus Halogensilan und Wasserstoff unter vermindertem Druck durch Einwirkung eines elektromagnetischen Wechselfeldes, beispielsweise Mikrowellenbestrahlung, ein Plasma erzeugt. Die Einstrahlung kann kontinuierlich oder diskontinuierlich erfolgen.

In einer weiteren Variante der Ausführungsform A wird zur Stabilisierung des Plasmas zusätzlich eine Hochspannung (Gleichspannung oder Wechselspannung) zwischen zwei außerhalb der Entladungszone befindlichen Elektroden angelegt, durch die der Entladungsstrom freie Ladungsträger in der Entladungszone erzeugt. Hierdurch wird die Einkopplung des elektromagnetischen Wechselfeldes in die Gasmischung entscheidend erleichtert, so dass die Plasmaerzeugung bereits bei deutlich geringerer Einstrahlungsenergie gelingt als ohne angelegte Hochspannung. Des weiteren erlaubt diese hochspannungsgestützte Variante des erfindungsgemäßen Verfahrens die Verwendung höherer Drücke innerhalb der Reaktionszone, so dass die Menge des erzeugten Polysilans pro Volumen und Zeit erhöht wird.

In einer Variante der Ausführungsform B wird in einem Wasserstoff-Gasstrom unter vermindertem Druck durch ein elektromagnetisches Wechselfeld, beispielsweise Mikrowellenstrahlung, ein Plasma erzeugt, wobei die Plasmaerzeugung durch das Anlegen einer Hochspannung zwischen zwei außerhalb der Plasmazone befindlichen Elektroden unterstützt wird. Auf die Plasmazone folgend wird in den Wasserstoffstrom gasförmiges Halogensilan eingebracht, welches zu halogeniertem Polysilan umgesetzt wird.

Die Abscheidung von elementarem Silicium in der Plasmaerzeugungszone, insbesondere auf den Wandungen, wirkt sich in manchen Varianten der Ausführungsform A des erfindungsgemäßen Verfahrens negativ auf die Plasmaerzeugung aus, so dass diese im Extremfall unterdrückt wird.

Die Umsetzung von Halogensilan zu halogeniertem Polysilan unter Vermeidung der Abscheidung von elementarem Silicium ist daher für diese Varianten essentiell, da das Polysilan die Plasmaerzeugung nicht merklich beeinflusst.

In beiden Ausführungsformen A und B des erfindungsgemäßen Verfahrens ist die Abscheidung des halogenierten Polysilans im Vergleich zur aus dem Stand der Technik bekannten Abscheidung von elementarem Silicium von wesentlichem Vorteil, da sich das Polysilan aufgrund seiner Konsistenz leichter aus dem Reaktor entfernen lässt.

Die Temperatur des Reaktors liegt während der Abscheidung des halogenierten Polysilans vorzugsweise bei weniger als 400 °C, bevorzugter bei weniger als 300 °C. Durch diese niedrige Temperatur wird eine Rückreaktion des gebildeten Polysilans mit dem als Nebenprodukt entstehenden HCl zu flüchtigen halo-genierten Monosilanen unterdrückt. Gleichzeitig wird die unerwünschte, spontane Entstehung von elementarem Silicium im Reaktor, beispielsweise durch thermische Zersetzung des primär gebildeten Polysilans, vermieden.

Die Reaktorwände können während der Abscheidungsreaktion zur Kontrolle der Temperatur durch geeignete Maßnahmen gekühlt werden. Beispiele geeigneter Maßnahmen sind Überleiten eines Luftstroms oder der Einsatz von an den apparativen Aufbau angepassten Kühlflüssigkeiten.

Die Eingangstemperatur des Halongensilan enthaltenden Gases in den Reaktionsraum beträgt bevorzugt zwischen minus 67°C und 100°C. Die Temperatur der den Reaktor verlassenden Gasmischung beträgt vorzugsweise weniger als 400°C.

Als Halogensilan werden bevorzugt Fluorsilane oder Chlorsilane eingesetzt. Eine besonders bevorzugte Ausgangsverbindung ist SiCl₄.

Das Volumenverhältnis Halogensilan : Wasserstoff beträgt bei der Herstellung des halogenierten Polysilans bevorzugt 1 : 0 bis 1 : 20, bevorzugter 1 : 2 bis 1 : 10.

Zur Herstellung des halogenierten Polysilans beträgt der Druck innerhalb der Reaktionszone vorzugsweise 0,1 - 1000 hPa, bevorzugter 5 - 100 hPa.

Das im ersten Schritt gewonnene halogenierte Polysilan wird in einer nachgeschalteten zweiten Reaktionszone der Apparatur unter Erhitzen in Anwesenheit geringer HCl-Konzentrationen zu Silicium und flüchtigen Silanen zersetzt oder das Polysilan wird zunächst aus dem Reaktor entfernt und in einem zweiten Reaktor zu Silicium umgesetzt.

Die Zersetzung des Polysilans kann auch in Anwesenheit von Wasserstoff und/oder inerten Gasen erfolgen. Ein Gasstrom kann den Abtransport der flüchtigen Zersetzungsprodukte unterstützen.

Die Zersetzung des Polysilans kann durch verminderten Druck während des Erhitzens unterstützt werden.

Zur Zersetzung des halogenierten Polysilans wird dieses vorzugsweise auf eine Temperatur von 400 °C bis 1500 °C, vorzugsweise von 450 °C bis 1000 °C, erhitzt.

Neben elementarem Silicium entstehen bei der thermischen Zersetzung des halogenierten Polysilans hauptsächlich halogenierte Monosilane, welche wieder in den ersten Schritt des erfindungsgemäßen Verfahrens zurückgeführt werden können.

Die Erfindung wird nachfolgend anhand von Ausführungsbeispielen beschrieben.

### Beispiel 1:

Ein Gemisch von H₂ und SiCl₄ (8:1) wird bei einem Druck von 10 - 20 hPa durch ein Quarzrohr mit einem Innendurchmesser von 10 mm geleitet und mittels Hochspannung zwischen zwei Elektroden eine schwache Glimmentladung (∼10 W) innerhalb des Rohres erzeugt. Daraufhin wird auf einer Strecke von 4,2 cm gepulste Mikrowellenstrahlung (2,45 GHz) mit Pulsenergien von 500 - 1500 W und einer Pulsdauer von 1 ms gefolgt von 9 ms Pause eingestrahlt, entsprechend einer mittleren Leistung von 50 - 150 W. Nach 11 h wird das braune bis farblos-ölige Produkt in einem Röhrenofen unter Vakuum auf 800 °C erhitzt. Es bildet sich ein grauschwarzer Rückstand (2,2 g), der durch Röntgenpulverdiffraktometrie als kristallines Si bestätigt wurde. Neben SiCl₄ wurden mehrere Gramm eines gelblichen Öls abdestilliert, welches sich durch rasches Erhitzen ebenfalls zu Si zersetzen lässt.

### Beispiel 2:

In einem Kolben wurden bei Raumtemperatur 1,48 g SiCl₄ in 2 L Wasserstoff verdampft, entsprechend einem Molverhältnis von 1:10. Dieses Gemisch wurde bei einem Druck von -20 hPa durch ein Quarzrohr mit einem Innendurchmesser von 10 mm geleitet. Auf einer Strecke von 4,2 cm wurde kontinuierlich Mikrowellenstrahlung (2,45 GHz) mit einer Leistung von 200 W eingestrahlt. Nach 30 min. war der Versuch beendet und das Reaktionsrohr wurde mit dem Bunsenbrenner auf -700 °C erhitzt, um das abgeschiedene farblose bis braune chlorierte Polysilan zu zersetzen. Die Ausbeute betrug etwa 150 mg Silicium, entsprechend einer Ausbeute von rund 60 % bezogen auf eingesetztes SiCl₄.

### Beispiel 3:

Reines, gasförmiges HSiCl₃ (864 mMol) wird bei einem Druck von 5 hPa durch ein Quarzrohr mit einem Innendurchmesser von 25 mm geleitet und mittels Hochspannung zwischen zwei Elektroden eine schwache Glimmentladung (∼10 W) innerhalb des Rohres erzeugt. Daraufhin wird auf einer Strecke von 4,2 cm gepulste Mikrowellenstrahlung (2,45 GHz) mit Pulsenergien von 500 - 1000 W und einer Pulsdauer von 1 ms gefolgt von 19 ms Pause eingestrahlt, entsprechend einer mittleren Leistung von 25 - 50 W. Nach 6 h werden 29 g (≥ 289 mMol = 33 % d.Th., abhängig vom nicht bestimmten Wasserstoffgehalt) eines hellgelben bis dunkelgelben Öls isoliert, welches während der Reaktion zum Teil selbstständig aus der Reaktionszone herausfloss. Das ölige Produkt erstarrt bei längerem Lagern bei Raumtemperatur zu einem glasigen, transparenten Feststoff. 5,82g des Produkts werden in einem Röhrenofen unter schwachem H₂-Strom bei einer Temperatur von 900°C pyrolisiert. Es bilden sich 0,824g ≤ 96,7% d.Th. (bezogen auf maximale Ausbeute bei der Disproportionierung von Polysilan) eines grau-schwarzen Rückstands von elementarem Silicium.

### Beispiel 4:

Ein 2L Ballon wird mit einem Gemisch von H₂ und SiF₄ (1:1; 45 mMol) gefüllt. Das entstehende Gasgemisch wird bei einem Druck von 10 - 20 hPa durch ein Quarzrohr mit einem Innendurchmesser von 13 mm geleitet und mittels Hochspannung zwischen zwei Elektroden eine schwache Glimmentladung (∼10 W) innerhalb des Rohres erzeugt. Daraufhin wird auf einer Strecke von 4,2 cm gepulste Mikrowellenstrahlung (2,45 GHz) mit einer Pulsenergie von 800 W und einer Pulsdauer von 1 ms gefolgt von 19 ms Pause eingestrahlt, entsprechend einer mittleren Leistung von 40 W. Nach ca. 7 h werden 0,63 g (ca. 20 % d. Th.) eines weißen bis bräunlichen Feststoffs erhalten. Beim Erwärmen auf 800 °C im Vakuum zersetzt sich das Material und es entsteht Silicium.

Erfindungsgemäß kann die Zersetzung zu Silicium innerhalb oder außerhalb eines Reaktors erfolgen. Das Gas, in dem die Plasmaentladung erzeugt wird, kann auch Halogenwasserstoff enthalten.

## Patentansprüche

1. Verfahren zur Herstellung von Silicium aus Halogensilanen, **dadurch gekennzeichnet, dass** in einem ersten Schritt das Halogensilan unter Erzeugung einer Plasmaentladung zu einem halogenierten Polysilan umgesetzt wird, das nachfolgend in einem zweiten Schritt unter Erhitzen zu Silicium zersetzt wird.

2. Verfahren nach Anspruch 1, **dadurch gekennzeichnet, dass** als Halogensilan Verbindungen des Typs HₙSiX₄₋ₙ (X = F, Cl, Br, I, n = 0 - 3) oder deren Mischungen eingesetzt werden.

3. Verfahren nach Anspruch 1 oder 2, **dadurch gekennzeichnet, dass** die Plasmaentladung in einem aus Halogensilan bestehenden oder dieses enthaltenden Gas erzeugt wird.

4. Verfahren nach Anspruch 1 oder 2, **dadurch gekennzeichnet, dass** die Plasmaentladung in einem Gas erzeugt wird, dem nachträglich ein aus Halogensilan bestehendes oder dieses enthaltendes Gas zugemischt wird.

5. Verfahren nach Anspruch 3 oder 4, **dadurch gekennzeichnet, dass** das Gas, in dem die Plasmaentladung erzeugt wird, zusätzlich Wasserstoff und/oder ein verdünnendes inertes Gas und/oder die Plasmaentladung begünstigende Zumischungen enthält.

6. Verfahren nach einem der vorangehenden Ansprüche, **dadurch gekennzeichnet, dass** die Plasmaentladung durch das Einbringen freier Ladungsträger in die Entladungszone unterstützt wird.

7. Verfahren nach Anspruch 6, **dadurch gekennzeichnet, dass** die freien Ladungsträger durch Anlegen einer Hochspannung zwischen Elektroden erzeugt werden.

8. Verfahren nach einem der vorangehenden Ansprüche, **dadurch gekennzeichnet, dass** die Plasmaentladung durch Einstrahlen eines elektromagnetische Wechselfeldes erzeugt wird.

9. Verfahren nach einem der vorangehenden Ansprüche, **dadurch gekennzeichnet, dass** die Erzeugung des halogenierten Polysilans bei einem Druck von 0,1 bis 1000 hPa erfolgt.

10. Verfahren nach einem der vorangehenden Ansprüche,
**dadurch gekennzeichnet, dass** die Eintrittstemperatur des Halogensilan enthaltenden Gases in einen Reaktor, in dem die Erzeugung des halogenierten Polysilans erfolgt, zwischen minus 67°C und 100°C liegt und die Temperatur der den Reaktor verlassenden Gasmischung weniger als 400°C beträgt.

11. Verfahren nach einem der vorangehenden Ansprüche, **dadurch gekennzeichnet, dass** die Temperatur der Wandungen eines Reaktors, in dem die Erzeugung des halogenierten Polysilans erfolgt, auf weniger als 400 °C gehalten wird.

12. Verfahren nach einem der vorangehenden Ansprüche, **dadurch gekennzeichnet, dass** die Temperatur zur Zersetzung des halogenierten Polysilans mehr als 500 °C beträgt.

13. Verfahren nach einem der vorangehenden Ansprüche, **dadurch gekennzeichnet, dass** die Zersetzung des halogenierten Polysilans unter vermindertem Druck erfolgt.

14. Verfahren nach einem der vorangehenden Ansprüche, **dadurch gekennzeichnet, dass** während der Zersetzung des halogenierten Polysilans ein Gasstrom durch die verwendete Apparatur geleitet wird.

15. Verfahren nach Anspruch 14, **dadurch gekennzeichnet, dass** der Gasstrom, der während der Zersetzung des Polysilans durch die Apparatur geleitet wird, Wasserstoff enthält.

16. Verfahren nach Anspruch 14, **dadurch gekennzeichnet, dass** der Gasstrom, der während der Zersetzung des Polysilans durch die Apparatur geleitet wird, aus inerten Gasen besteht.

17. Verfahren nach einem der vorangehenden Ansprüche, **dadurch gekennzeichnet, dass** die Zersetzung zu Silicium innerhalb oder außerhalb eines Reaktors erfolgt.

18. Verfahren nach einem der vorangehenden Ansprüche, **dadurch gekennzeichnet, dass** das Gas, in dem die Plasmaentladung erzeugt wird, Halogenwasserstoff enthält.

## Claims

1. A process for the production of silicon from halosilanes **characterised in that** in a first step the halosilane is converted with the production of a plasma discharge to a halogenated polysilane which in a second step is then decomposed to give silicon with heating.

2. A process according to claim 1 **characterised in that** compounds of the type HₙSiX₄₋ₙ (X = F, Cl, Br, I, n = 0 - 3) or mixtures thereof are used as halosilane.

3. A process according to claim 1 or claim 2 **characterised in that** the plasma discharge is produced in a gas containing or consisting of halosilane.

4. A process according to claim 1 or claim 2 **characterised in that** the plasma discharge is produced in a gas to which a gas containing or consisting of halosilane is subsequently added.

5. A process according to claim 3 or claim 4 **characterised in that** the gas in which the plasma discharge is produced additionally contains hydrogen and/or a diluting inert gas and/or admixtures promoting the plasma discharge.

6. A process according to one of the preceding claims **characterised in that** the plasma discharge is assisted by the introduction of free charge carriers into the discharge zone.

7. A process according to claim 6 **characterised in that** the free charge carriers are produced by applying a high voltage between electrodes.

8. A process according to one of the preceding claims **characterised in that** the plasma discharge is produced by radiating an alternating electromagnetic field.

9. A process according to one of the preceding claims **characterised in that** production of the halogenated polysilane is effected at a pressure 0.1 to 1000 hPa.

10. A process according to one of the preceding claims **characterised in that** the entry temperature of the halosilane-bearing gas into a reactor in which production of the halogenated polysilane is effected is between minus 67°C and 100°C and the temperature of the gas mixture leaving the reactor is less than 400°C.

11. A process according to one of the preceding claims **characterised in that** the temperature of the walls of a reactor in which the production of the halogenated polysilane is effected is held at less than 400°C.

12. A process according to one of the preceding claims **characterised in that** the temperature for decomposition of the halogenated polysilane is more than 500°C.

13. A process according to one of the preceding claims **characterised in that** decomposition of the halogenated polysilane is effected under a reduced pressure.

14. A process according to one of the preceding claims **characterised in that** during decomposition of the halogenated polysilane a gas flow is passed through the apparatus used.

15. A process according to claim 14 **characterised in that** the gas flow which is passed through the apparatus during the decomposition of the polysilane contains hydrogen.

16. A process according to claim 14 **characterised in that** the gas flow which is passed through the apparatus during the decomposition of the polysilane comprises inert gases.

17. A process according to one of the preceding claims **characterised in that** decomposition to give silicon is effected within or outside a reactor.

18. A process according to one of the preceding claims **characterised in that** the gas in which the plasma discharge is produced contains hydrogen halide.

## Revendications

1. Procédé de production de silicium à partir de silanes halogénés, **caractérisé en ce que,** le silane halogéné est converti, dans une première étape, en un polysilane halogéné par production d'une décharge plasma, lequel est ensuite décomposé, dans une seconde étape, par chauffage en silicium.

2. Procédé selon la revendication 1, **caractérisé en ce qu'**on utilise en tant que silane halogéné des composés du type HₙSiX₄₋ₙ (X = F, Cl, Br, I, n = 0 à 3) ou leur mélange.

3. Procédé selon la revendication 1 ou 2, **caractérisé en ce que** la décharge plasma est produite dans un gaz constitué de silane halogéné ou contenant celui-ci.

4. Procédé selon la revendication 1 ou 2, **caractérisé en ce que** la décharge plasma est produite dans un gaz qui est ultérieurement mélangé à un gaz constitué de silane halogéné ou contenant celui-ci.

5. Procédé selon la revendication 3 ou 4, **caractérisé en ce que** le gaz, dans lequel la décharge au plasma est produite, contient en outre de l'hydrogène et/ou un gaz inerte de dilution et/ou des mélanges favorisant la décharge plasma.

6. Procédé selon l'une quelconque des revendications précédentes, **caractérisé en ce que** la décharge plasma est favorisée par l'introduction de porteurs de charge libres dans la zone de décharge.

7. Procédé selon la revendication 6, **caractérisé en ce que** les porteurs de charge libres sont produits par application d'une haute tension entre des électrodes.

8. Procédé selon l'une quelconque des revendications précédentes, **caractérisé en ce que** la décharge plasma est produite par irradiation avec un champ électromagnétique alternatif.

9. Procédé selon l'une quelconque des revendications précédentes, **caractérisé en ce que** la production du polysilane halogéné a lieu à une pression de 0,1 à 1 000 hPa.

10. Procédé selon l'une quelconque des revendications précédentes, **caractérisé en ce que** la température d'entrée du gaz contenant le silane halogéné dans un réacteur, dans lequel la production du polysilane halogéné a lieu, est comprise entre moins 67 °C et 100 °C et **en ce que** la température de mélange de gaz sortant du réacteur est inférieure à 400 °C.

11. Procédé selon l'une quelconque des revendications précédentes, **caractérisé en ce que** la température des parois d'un réacteur dans lequel la production du polysilane halogéné a lieu est maintenue inférieure à 400 °C.

12. Procédé selon l'une quelconque des revendications précédentes, **caractérisé en ce que** la température pour décomposer le polysilane halogéné est supérieure à 500 °C.

13. Procédé selon l'une quelconque des revendications précédentes, **caractérisé en ce que** la décomposition du polysilane halogéné a lieu sous pression réduite.

14. Procédé selon l'une quelconque des revendications précédentes, **caractérisé en ce que** pendant la décomposition du polysilane halogéné, un flux gazeux est amené à travers l'appareil utilisé.

15. Procédé selon la revendication 14, **caractérisé en ce que** le flux gazeux amené à travers l'appareil pendant la décomposition du polysilane contient de l'hydrogène.

16. Procédé selon la revendication 14, **caractérisé en ce que** le flux gazeux amené à travers l'appareil pendant la décomposition du polysilane est constitué de gaz inertes.

17. Procédé selon l'une quelconque des revendications précédentes, **caractérisé en ce que** la décomposition en silicium a lieu à l'intérieur ou à l'extérieur d'un réacteur.

18. Procédé selon l'une quelconque des revendications précédentes, **caractérisé en ce que** le gaz dans lequel la décharge plasma est produite contient un halogénure d'hydrogène.
